# FASCICULE DE BREVET EUROPEEN

(11) **EP 1 812 907 B1**
(45) Date de publication et mention de la délivrance du brevet: **05.11.2008**
(21) Numéro de dépôt: 05798338.9
(22) Date de dépôt: 12.08.2005
(51) Int. Cl.: G07C 9/00, B64F 1/30

(54) **SYSTEME POUR UNE SECURITE RENFORCEE DES PASSAGERS EN VUE DE LEUR EMBARQUEMENT A BORD D'UN MOYEN DE TRANSPORT**
SYSTEM FÜR VERBESSERTE SICHERHEIT VON PASSAGIEREN ZUM ANBOARDGEHEN EINES TRANSPORTMITTELS
SYSTEM FOR ENHANCED SECURITY OF PASSENGERS FOR BOARDING A MEANS OF TRANSPORT

(30) Priorité: 17.08.2004 FR 0408925
(43) Date de publication de la demande: 01.08.2007
(73) Titulaire: Ellen Investments Ltd, Road Town (VG)
(72) Inventeur: Devaux, Franklin, 21370 Prenois (FR)
(74) Mandataire: Puiroux, Guy
(86) Numéro de dépôt international: PCT/FR2005/002081
(87) Numéro de publication internationale: WO 2006/021684

(56) Documents cités:
- EP-A- 0 065 056
- WO-A-02/27686
- WO-A-03/065257
- US-A- 4 378 755
- US-A1- 2003 122 685

## Description

La présente invention concerne un système visant à résoudre le problème de la sécurité des passagers en vue de leur embarquement à bord d'un moyen de transport du type avion ou tout autre moyen de transport terrestre voire nautique.

Les activités terroristes représentent à l'heure actuelle un danger considérable au niveau des transports en commun et il apparaît indispensable pour la sécurité des passagers de réussir à interdire l'accès aux moyens de transport et/ou au lieu d'embarquement à toute personne mal intentionnée.

Une réelle demande émerge aujourd'hui de la part des usagers des transports, notamment du type avion, pour accroître le niveau de sécurité lors de l'embarquement et lors du transport lui-même ; dans le cas contraire, dans les années futures une importante baisse de la fréquentation risque d'affecter ce type de transport, ce qui aurait des répercussions financières néfastes considérables sur les compagnies de transport, notamment aériennes.

On connaît déjà des systèmes visant à permettre le contrôle individuel d'accès à un aéroport ; c'est le cas par exemple du brevet anglais GB 2 382 907 concernant un système pour le contrôle individuel d'accès à un aéroport comprenant une carte qui possède des informations telles que, par exemple, des caractéristiques bio-métriques qui peuvent être lues par une machine de contrôle d'accès. Cette machine compare alors au moyen d'un processeur ces informations à des informations prises en temps réel chez l'utilisateur. Le processeur autorise ou non l'accès après que l'utilisateur ait entré un numéro que lui seul connaît.

La carte d'accès peut comporter par ailleurs, les caractéristiques du statut de l'utilisateur (passager, employé, niveau hiérarchique...) ce qui détermine les lieux dont l'accès est autorisé au sein de l'aéroport.

Néanmoins, la configuration actuelle des lieux d'embarquement dans un moyen de transport, notamment du type avion, est telle que les lieux où un contrôle d'accès est nécessaire sont distants les uns des autres, disséminés au sein même de l'espace global voué à l'embarquement ; cette multiplicité de lieux de contrôle démultiplie en conséquence les risques d'intrusion de personnes non autorisées à y accéder ou qui risqueraient de nuire à la sécurité des intervenants au transport, à savoir les passagers et les personnels administratif, technique et naviguant.

De plus, le passage d'un lieu où le contrôle d'accès est indispensable à un autre s'effectue au travers de zones où la sécurité est moindre, voire nulle ; ce sont dans ces zones libre d'accès et, à ce titre, de sécurité très limitée, que sont implantés tous les lieux publics autres que dédiés à l'embarquement lui-même tels que les salles d'attente, les toilettes ou les lieux de traitement des bagages. Ainsi, il apparaît évident que la sécurité des intervenants participant au transport est très limitée au sein de ces zones ; tout individu peut alors s'emparer de l'identité d'un des intervenants, et il apparaît envisageable qu'une personne désirant intenter un acte terroriste ou toute autre action, s'introduise dans l'avion au moment des opérations de maintenance et d'entretien de l'appareil, avant son prochain décollage, et détériore l'appareil ou reste à l'intérieur de celui-ci. De même, l'avion est immobilisé en voie de stockage au sein du terminal où il demeure jusqu'à son prochain vol. Durant toutes les opérations de maintenance, d'approvisionnement, de chargement et d'entretien, l'avion reste accessible de l'extérieur de l'aérogare. Il est donc envisageable qu'un terroriste ou un passager clandestin pénètre par un des points d'accès de l'avion, tel que la soute à bagage.

On connaît la demande de brevet internationale WO-A-02/27686 qui décrit un système pour la sécurité des passagers en vue de leur embarquement à bord d'un avion, ledit embarquement s'effectuant au sein d'un espace sécurisé possédant des moyens d'accès dotés de moyens de contrôle permettant d'identifier les intervenants participant au transport, ledit espace étant équipé de moyens de contrôle supplémentaires disposés à des endroits stratégiques permettant de suivre lesdits intervenants depuis leur accès audit espace sécurisé jusqu'à leur embarquement dans l'avion.

Ce système décrit dans le document WO-A-02/27686 n'empêche pas l'accès à bord dudit avion depuis l'extérieur de l'espace sécurisé.

L'un des buts de l'invention est donc de pallier ces inconvénients en proposant un système permettant de résoudre le problème de la sécurité des passagers en vue de leur embarquement à bord d'un moyen de transport du type avion ou tout autre moyen de transport terrestre voire nautique dans lequel toutes les opérations relatives à l'embarquement s'effectuent au sein d'un périmètre complètement sécurisé délimitant un espace sécurisé unique empêchant tout accès à bord du moyen de transport sans avoir été contrôlé préalablement. A cet effet, et conformément à l'invention, il est proposé un système pour la sécurité des passagers en vue de leur embarquement à bord d'un moyen de transport du type avion ou tout autre moyen de transport terrestre voire nautique, ledit embarquement s'effectuant au sein d'un espace sécurisé unique possède au moins un moyen d'accès doté de moyens de contrôle permettant d'identifier avec certitude les intervenants participant au transport à savoir les passagers et les personnels administratif, technique et naviguant, ledit espace sécurisé étant doté d'un ou plusieurs desdits moyens de contrôle, disposés à des emplacements stratégiques, permettant de suivre lesdits intervenants depuis leur accès audit espace sécurisé jusqu'à leur embarquement dans ledit moyen de transport, tant que ledit moyen de transport reste immobile, ledit espace sécurisé étant remarquable en ce qu'il est muni d'au moins une ouverture sécurisée permettant l'introduction au sein dudit espace sécurisé d'au moins une partie du moyen de transport comprenant au moins un moyen d'accès audit moyen de transport, ladite ouverture sécurisée étant constituée de moyens de fermeture qui s'adaptent aux dimensions du moyen de transport et suppriment toute possibilité de sortir ou de pénétrer dans l'espace sécurisé par ladite ouverture sécurisée.

On comprend bien que contrairement à l'art antérieur le système suivant l'invention permet avantageusement de diminuer fortement les risques d'intrusion illicite de toute personne susceptible de nuire à la sécurité des intervenants participant au transport, notamment des passagers, en réalisant une centralisation de toutes les opérations relatives à l'embarquement desdits passagers au sein d'un moyen de transport, ces opérations étant centralisées à l'intérieur d'un espace unique sécurisé ayant un nombre de moyens d'accès réduit, chacun d'eux étant doté de moyens de contrôle permettant d'identifier avec certitude toutes les personnes autorisées à accéder audit espace et singulièrement les passagers destinés à embarquer au sein dudit moyen de transport.

Par ailleurs, la délimitation d'un espace sécurisé unique suffisamment vaste permet avantageusement d'y intégrer tous les lieux dits publics généralement de sécurité réduite ou nulle telle que toilettes, salles d'attente, salles de traitement des bagages etc., de sorte que toutes les opérations d'embarquement puissent bénéficier de la sécurité totale offerte par l'espace sécurisé, ce qui confère une sérénité et par conséquent, un bien-être certain aux intervenants participant au transport.

Bénéficiant de la centralisation des opérations au sein d'un espace unique sécurisé, les opérations d'entretien et de maintenance des moyens de transport sont effectuées au sein dudit espace sécurisé de sorte que ces opérations puissent être rendues complètement fiables en terme de risques terroristes notamment, car elles sont alors réalisées en des lieux sécurisés par du personnel contrôlé et exempt de tout soupçon.

D'autres avantages et caractéristiques ressortiront mieux de la description qui va suivre d'un exemple de réalisation du système pour la sécurité des passagers en vue de leur embarquement à bord d'un moyen de transport en référence aux dessins annexés sur lesquels :
- la figure 1 est une vue schématique de dessus d'un exemple particulier du système conforme à l'invention.
- la figure 2 est une vue latérale d'une partie du système conforme à l'invention,
- la figure 3 est une vue de face d'une partie du système conforme à l'invention.

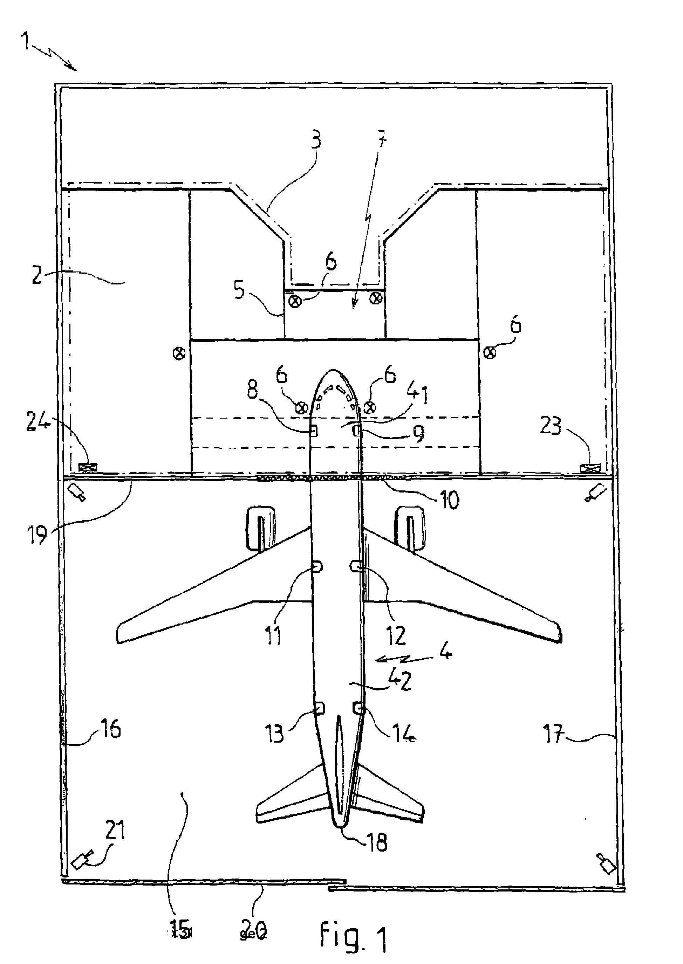

Le système 1 suivant l'invention en référence à la figure 1 est constitué d'un espace 2 délimité par un périmètre 3 formant frontière infranchissable pour quiconque n'a pas été contrôlé. Ainsi, la présence au sein dudit espace 2 de tout individu indésirable est impossible, ce qui confère audit espace 2 le caractère de sécurité optimale que réclament actuellement les usagers des moyens de transport et plus généralement tous les intervenants au transport, à savoir en complément les personnels administratif, technique et navigant.

Le moyen de transport en question qui sera utilisé dans la suite de la description pour décrire l'objet de la présente invention sera un avion 4 ; l'invention reste cependant applicable à tout autre moyen de transport nautique ou terrestre.

Cet espace sécurisé 2 présente la particularité d'unicité de lieu de sorte que les possibilités d'accès frauduleux en sont indéniablement restreintes en comparaison des configurations connues où les lieux dont l'accès est strictement contrôlé, en vue de leur sécurisation, sont multiples et distants les uns des autres.

L'espace unique 2 a donc pour vocation essentielle de constituer une interface hautement sécurisée entre le milieu extérieur et le moyen de transport 4 dont l'accès ne sera alors autorisé qu'aux seuls usagers ayant préalablement été autorisés à accéder audit espace sécurisé 2. A cet égard, l'espace sécurisé 2 possède au moins un moyen d'accès 5 doté de moyens de contrôle 6 qui permettent d'identifier avec certitude les intervenants au transport.

Selon une autre caractéristique de l'invention, le moyen d'accès 5 à l'espace sécurisé 2 est un local 7 du type sas qui n'autorise la présence que d'une seule personne à chaque instant. Au moins un moyen de contrôle 6 est implanté au sein dudit local 7 et ne sont autorisées à franchir ce local 7 que les personnes ayant été identifiées avec certitude par ledit moyen de contrôle 6.

De manière particulièrement avantageuse, un ou plusieurs moyens de contrôle 6 sont disposés à des emplacements stratégiques au sein de l'espace sécurisé 2 de sorte que les intervenants participant au transport sont suivis tout au long de leurs déplacements et de leurs activités depuis leur entrée dans l'espace sécurisé 2 jusqu'à leur sortie ou leur embarquement dans l'avion 4, et ce tant que celui-ci reste immobile.

Selon une caractéristique essentielle de l'invention, l'un des moyens de contrôle 6 est disposé au niveau du moyen d'accès 8, 9 à l'avion 4 afin d'offrir une garantie supplémentaire qu'aucune personne dont la présence au sein de l'avion 4 est indésirable ne peut y pénétrer dans l'hypothèse où l'un des moyens de contrôle 6, pourrait s'avérer défectueux ou momentanément inefficace.

Selon l'invention, les moyens de contrôle 6 n'autorisent l'accès qu'aux personnes ayant préalablement été identifiées et dont l'autorisation d'accès est établie selon des critères précis et rigoureux. Ces personnes sont alors répertoriées selon ces critères qui sont rigoureusement stockés dans une base de données.

Plus spécifiquement, les moyens de contrôle 6 consistent en un terminal interactif apte à collecter des informations à partir d'un support de données stockées selon des critères d'identification et/ou à partir de la personne à identifier. Dans le but d'accroître le niveau de sécurité, ces informations peuvent essentiellement être du type bio-métriques. Après analyse de ces informations, les moyens de contrôle 6 réalisent ou non l'identification du demandeur qui doit alors correspondre à l'une des personnes ayant préalablement été identifiées avant d'en autoriser l'accès.

Selon une variante de l'invention, le support de données consiste en une carte personnelle possédant au moins une puce électronique qui intègre un algorithme personnel d'identification. Par ailleurs, la carte personnelle peut comporter une antenne du type émettrice et/ou réceptrice procurant tous les types d'application déjà connus ainsi qu'un CD-ROM ou tout autre moyen permettant la compilation d'informations qui pourraient être décryptées à l'aide de logiciels spécifiques mis en oeuvre par ordinateur par exemple. La carte personnelle peut également permettre d'effectuer des opérations anonymes et sécurisées offrant un confort certain et une sécurité optimale à son propriétaire telles que des réservations de vol, d'hôtels ou de véhicules, la gestion des bagages, ou bien l'accès à Internet de manière sécurisée au sein de l'espace sécurisé 2 ou à bord de l'avion 4.

De manière caractéristique, l'identification du propriétaire du support de données est réalisée au niveau du moyen de contrôle 6 grâce à un processeur qui, dans un premier temps, sélectionne aléatoirement un ou plusieurs critères parmi les critères d'identification stockés sur le support de données ou sur une base de données annexe, ces données étant notamment bio-métriques : photographies, empreintes digitales, analyse d'iris, dynamique de signatures, reconnaissance vocale, empreinte ADN, un code barre à au moins huit caractères ou toute autre donnée caractérisant personnellement chaque individu. Dans un second temps, le processeur compare les critères sélectionnés avec des informations déterminées en temps réel au moment de l'identification à partir de la personne à identifier, ces informations étant collectées au moyen du terminal interactif.

Le système suivant l'invention vise à résoudre le problème pour la sécurité des passagers en vue de leur embarquement à bord d'un avion 4 et cette sécurisation est obtenue par l'introduction de la partie avant 4₁ de l'avion 4 au sein de l'espace sécurisé 2. La partie 4₁ de l'avion 4 introduite est telle qu'elle doit comporter au moins un moyen d'accès 8,9 à l'avion 4 afin d'en permettre l'accès aux personnes autorisées à y embarquer depuis l'intérieur dudit espace sécurisé 2. L'introduction de l'avion 4 au sein de l'espace sécurisé 2 est réalisée au travers d'une ouverture sécurisée 10 telle qu'aucun corps vivant ou matériel autre que l'avion 4 ne peut y être introduit. Cette ouverture sécurisée 10 sera décrite plus en détail ci-après.

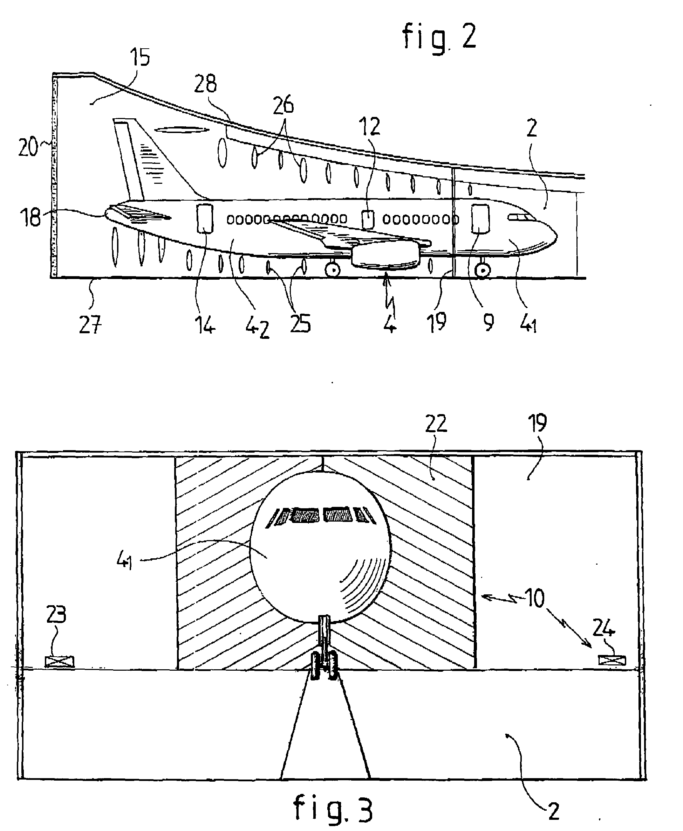

Les autres accès 11, 12, 13, 14 à l'avion 4 qui ne se situent pas dans l'espace sécurisé 2, en particulier pour les gros avions de lignes, sont quant à eux situés dans un espace inaccessible de l'extérieur de l'aérogare qui définit une zone de parcage cloisonnée 15 dans laquelle se situe la partie arrière 4₂ de l'avion 4. Cette zone de parcage cloisonnée 15 est délimitée par les parois latérales 16 et 17 de l'enceinte du système 1 qui s'étendent au delà de l'extrémité arrière 18 de l'avion 4, par la paroi intermédiaire 19, disposant de l'ouverture sécurisée 10, qui sépare la zone de parcage 15 et l'espace sécurisé 2, et par un dispositif de fermeture 20 disposé aux extrémités arrières des parois latérales 16 et 17 ; la zone de parcage 15 étant recouverte d'une toiture dont la forme est adaptée à celle de l'avion 4 vu de profil, tel que présenté sur la figure 2.

Le dispositif de fermeture 20 sera constitué, dans un mode préférentiel et non limitatif, par une barrière à un ou deux ventaux, par exemple grillagée, montée soit articulée soit sur glissière, et de préférence motorisée. Sa hauteur sera de préférence adaptée à celle des parois latérales 16 et 17 pour garantir une fermeture totale de la zone de parcage 15 et supprimer toute possibilité d'escalader la barrière pour accéder à l'avion par les accès 11, 12, 13, 14 situés dans la zone de parcage 15.

Dans un mode préférentiel et non limitatif, les parois latérales 16 et 17 sont de longueurs adaptées pour permettre l'insertion totale de l'avion 4 dans la zone de parcage 15, avant l'introduction de la partie avant 4₁ à l'intérieur de l'espace sécurisé 2. Ainsi, lorsque l'avion a pénétré intégralement dans la zone 15, des moyens de contrôle, par exemple du type caméra 21, vérifient qu'aucune personne ne se trouve dans la zone de parcage 15 avant l'activation du dispositif de fermeture 20. Puis, lorsque la zone 15 est cloisonnée, et après un second contrôle des caméras 21 s'assurant que personne n'a pénétré dans l'enceinte pendant la fermeture de la zone 15, l'avion est alors autorisé à pénétrer par l'ouverture sécurisée 10, au sein de l'espace sécurisé 2. Cette procédure d'accès certifie que toute personne qui interviendra sur l'avion aura été préalablement autorisée à accéder à l'espace sécurisé 2 par le moyen d'accès 5, puis à pénétrer dans l'avion 4 par la partie avant 4₁ où elle aura subi un nouveau contrôle d'identification en entrant puis en sortant de l'avion 4 grâce aux moyens de contrôle 6 installés au niveau des moyens d'accès 8,9 à l'avion 4.

L'ouverture sécurisée 10 est constituée par des moyens de fermeture 22 qui s'adaptent aux dimensions de l'avion et épousent parfaitement la paroi de la carlingue, supprimant ainsi toute possibilité de sortir ou de pénétrer dans l'espace sécurisé 2 par l'ouverture sécurisée 10. La partie avant 4₁ de l'avion, située dans l'espace sécurisé 2, est ainsi complètement isolée de l'extérieur par rapport à la partie arrière 4₂ située dans la zone de parcage 15 qui est cloisonnée. Dans un mode préférentiel et non limitatif, des moyens de détection 23 et 24 seront disposés dans l'espace sécurisé 2, le long de la paroi intermédiaire 19, pour détecter toute tentative d'effraction de l'ouverture sécurisée 10.

On garantit ainsi qu'aucune personne ne peut entrer dans l'avion 4 par la partie arrière 4₂ et que toutes les personnes qui interviennent dans l'avion 4 pour les opérations de maintenance, d'entretien, etc., sont canalisées et pénètrent dans l'avion 4, après que leur identité ait été vérifiée, par les moyens de contrôle 6 disposés aux moyens d'accès 8, 9, ces moyens de contrôle 6 vérifiant que toutes les personnes entrées sont effectivement ressorties. Dans le cas contraire, le personnel non contrôlé à la sortie se situe alors dans l'avion ou dans la zone de parcage 15 qui est cloisonnée, toute tentative de pénétration dans l'espace sécurisé 2 depuis la zone de parcage 15 en passant par l'ouverture sécurisée 10 étant détectable grâce aux moyens de détection 23, 24.

On pourra par exemple concevoir des moyens de fermeture 22 composés de plusieurs rideaux, en matériau souple ou rigide, chaque rideau étant précisément adapté aux dimensions et formes de la carlingue de l'avion, en fonction du modèle pouvant être accueilli dans l'espace sécurisé 2. Les rideaux sont par exemple montés sur glissière le long de la paroi intermédiaire 19 et translatent transversalement par rapport à la carlingue de l'avion jusqu'à le ceinturer et neutraliser entièrement l'espace sécurisé 2 par rapport à la zone de parcage 15. Les moyens de détection 23 et 24 sont, par exemple des détecteurs de présence tels que des capteurs à rupture de faisceau positionnés aux extrémités latérales de la paroi intermédiaire 19, le faisceau se rompant lorsqu'une personne tente de franchir le rideau mis en place, alertant dans ce cas le service de sécurité de la compagnie de transport occupant l'enceinte du système 1.

Le système 1 est équipé dans un mode préférentiel et non limitatif d'un dispositif de nettoyage et de dégivrage 25 et 26 qui, tout d'abord, permet avantageusement de maintenir un niveau de propreté remarquable de l'avion 4 et de valoriser l'image de marque de la compagnie aérienne occupant l'enceinte sécurisée, et surtout permet de réaliser, en particulier pendant les périodes hivernales, un dégivrage de l'avion juste avant que celui-ci ne prenne son envol. Ainsi, pendant l'embarquement des passager qui accèdent à l'avion par les moyens d'accès 8 et 9, du type passerelles, situés dans l'espace sécurisé 2 où ils sont soumis aux moyens de contrôle 6, le dispositif de nettoyage et de dégivrage 25 et 26 rend opérationnel l'avion qui est prêt à décoller immédiatement après sa sortie hors de la zone de parcage 15 qui s'effectue dès l'ouverture du dispositif de fermeture 20 ; on limite ainsi les risques d'attentat terroriste sur l'avion lorsque celui-ci est accessible depuis l'extérieur de l'aérogare.

Le dispositif de nettoyage et/ou de dégivrage 25 et 26 est constitué, dans un mode préférentiel et non limitatif par des rampes d'aspersion disposées en partie basse sur le sol 27 et en partie haute sous la toiture 28 telles que représentées sur la figure 2. On pourra par exemple prévoir une rampe supérieure télescopique positionnée sous la toiture 28 qui se déploie et prend la forme de l'avion vu de dessus, en particulier au niveau des ailes, et une rampe inférieure télescopique positionnée sur le sol 27 qui se déploie et prend également la forme de l'avion vu de dessous. Les rampes seront par exemple constituées de deux types de buses, le premier type étant des buses qui éjectent du produit de nettoyage et le second type étant des buses qui éjectent du produit de dégivrage. En fonction de la saison, le dispositif pourra actionner simultanément ou séparément le nettoyage et le dégivrage de l'avion 4.

Bien entendu diverses modifications peuvent être apportées par l'Homme du Métier au système qui vient d'être décrit uniquement à titre d'exemple non limitatif sans sortir du cadre de l'invention.

Sans sortir du cadre de la présente invention, on pourrait envisager le système 1 qui dispose d'un espace sécurisé permettant d'intégrer la totalité du moyen de transport 4. Dans ce cas particulier, la zone de parcage 15 serait alors intégrée dans l'espace sécurisé 2 et l'ouverture sécurisée 10 serait mise en oeuvre au niveau de l'extrémité arrière de la zone de parcage 15.

## Revendications

1. Système (1) pour la sécurité des passagers en vue de leur embarquement à bord d'un moyen de transport (4) du type avion ou tout autre moyen de transport terrestre voire nautique, ledit embarquement s'effectuant au sein d'un espace sécurisé (2) unique possède au moins un moyen d'accès (5) doté de moyens de contrôle (6), permettant d'identifier avec certitude les intervenants participant au transport, à savoir les passagers et les personnels administratif, technique et navigant, ledit espace sécurisé (2) étant doté d'un ou plusieurs desdits moyens de contrôle (6), disposés à des emplacements stratégiques, permettant de suivre lesdits intervenants depuis leur accès audit espace sécurisé (2) jusqu'à leur embarquement dans ledit moyen de transport (4), tant que ledit moyen de transport (4) reste immobile, **caractérisé en ce que** ledit espace sécurisé (2) est muni d'au moins une ouverture sécurisée (10) permettant l'introduction au sein dudit espace sécurisé (2) d'au moins une partie (4₁) du moyen de transport (4) comprenant au moins un moyen d'accès (8, 9) audit moyen de transport (4), ladite ouverture sécurisée (10) étant constituée de moyens de fermeture (22) qui s'adaptent aux dimensions du moyen de transport (4) et suppriment toute possibilité de sortir ou de pénétrer dans l'espace sécurisé (2) par ladite ouverture sécurisée (10).

2. Système (1) selon la revendication 1 **caractérisé en ce que** lesdits moyens de contrôle (6) n'autorisent l'accès qu'aux personnes ayant préalablement été identifiées et répertoriées selon des critères stockés dans une base de données.

3. Système (1) selon l'une quelconque des revendications 1 ou 2 **caractérisé en ce que** l'un desdits moyens de contrôle (6) est disposé au niveau du moyen d'accès (8, 9) audit moyen de transport (4).

4. Système (1) selon l'une quelconque des revendications suivantes **caractérisé en ce que** lesdits moyens de contrôle (6) consistent en un terminal interactif apte à collecter des informations, notamment bio-métriques, à partir d'un support de données qui sont stockées selon des critères d'identification et/ou à partir de la personne à identifier afin de réaliser l'identification du propriétaire dudit support de données et d'en autoriser ou non l'accès.

5. Système (1) selon la revendication 4 **caractérisé en ce que** ledit support de données consiste en une carte personnelle comportant au moins une puce électronique intégrant un algorithme personnel d'identification de son propriétaire, une antenne et un CD-Rom ou tout autre moyen permettant la compilation d'informations destinées à être décryptées au moyen de logiciels spécifiques mis en oeuvre par ordinateur.

6. Système (1) selon la revendication 4 **caractérisé en ce que** ladite identification est réalisée au moyen d'un processeur qui dans un premier temps sélectionne de manière aléatoire un ou plusieurs critères parmi lesdits critères d'identification stockés sur ledit support de données ou dans une base de données annexe, notamment bio-métriques, tels que photographies, empreintes digitales, analyse d'iris, dynamique de signature, reconnaissance vocale, empreinte ADN, un code barres à au moins 8 caractères ou tout autre donnée identifiant personnellement chaque individu, puis qui compare lesdits critères sélectionnés avec des informations déterminées en temps réel au moment de l'identification à partir de la personne à identifier au moyen dudit terminal interactif.

7. Système (1) selon l'une quelconque des revendications précédentes **caractérisé en ce que** le moyen d'accès (5) audit espace sécurisé (2) est un local (7) du type sas où le moyen de contrôle (6) permettant d'identifier avec certitude les intervenants participant au transport est mis en oeuvre, ledit local (7) n'autorisant la présence que d'une seule personne à chaque instant.

8. Système (1) selon l'une quelconque des revendications précédentes, **caractérisé en ce que** la partie avant (4₁) du moyen de transport (4) est introduite dans l'enceinte sécurisée (2) par l'ouverture sécurisée (10) et isolée de la partie arrière (4₂) du moyen de transport 4 par l'ouverture sécurisée (10), la partie arrière (4₂) étant cloisonnée par un dispositif de fermeture (20) dans une zone de parcage (15) inaccessible de l'extérieur de l'enceinte du système (1).

9. Système (1) selon l'une quelconque des revendications précédentes, **caractérisé en ce que** l'ouverture sécurisée (10) est constituée de moyens de fermetures (22), adaptés au modèle du moyen de transport (4), et de moyens de détection (23, 24) permettant de détecter toute tentative d'effraction de ladite ouverture sécurisée (10).

10. Système (1) selon l'une quelconque des revendications précédentes, **caractérisé en ce qu'**il comprend un dispositif de nettoyage et de dégivrage (25, 26) permettant de rendre le moyen de transport (4) opérationnel pour le départ immédiatement après l'ouverture de la zone de parcage (15).

## Claims

1. System (1) for the security of passengers boarding a means of transport (4) such as an aircraft or any other means of land or water transport, said boarding being carried out inside a single secure site (2) comprises at least one access means (5) equipped with control means (6), enabling those concerned by the transport, namely the passengers and the administrative, technical and crew personnel to be securely identified, said secure site (2) being equipped with one or more of said control means (6), arranged at strategic locations, enabling said involved persons to be followed from the time of their access to said secure site (2) until their boarding said means of transport (4), as long as said means of transport (4) is not moving, **characterised in that** said secure site (2) is equipped with at least one secure opening (10) enabling at least part of said means of transport (4₁) of said means of transport (4) to be introduced into said secure site (2) including at least one access means (8, 9) to said means of transport (4), said secure opening (10) being comprised of means of closing (22) which adapt to the dimensions of the means of transport (4) and suppress all possibilities of exiting or penetrating into the secure site (2) via said secure opening (10).

2. System (1) set forth in claim 1 **characterised in that** said control means (6) permits access only to persons that have been identified and listed beforehand according to criteria stored in a database.

3. System (1) as set forth in any of claims 1 or 2 **characterised in that** one of said control means (6) is arranged on the access means (8, 9) of said means of transport (4).

4. System (1) as set forth in any of the following claims **characterised in that** said control means (6) comprise an interactive terminal able to collect information, in particular biometric information, using a data medium which is stored according to identification criteria and/or using the person to be identified in order to perform the identification of the owner of said data medium and whether or not to allow access to it.

5. System (1) set forth in claim 4 **characterised in that** said data medium comprises a personal card comprising at least one electronic chip integrating a personal identification algorithm of its owner, an antenna and a CD-Rom or any other means making it possible to compile information intended to be decoded using specific software implemented by computer.

6. System (1) set forth in claim 4 **characterised in that** said identification is performed using a processor that preliminarily randomly selects one or more criteria from among said identification criteria stored on said data medium or in an annex database, in particular biometric, such as photographs, fingerprints, iris analysis, dynamic signature, voice recognition, DNA print, a barcode of at least 8 characters or any other data that personally identifies each individual, then which compares said selected criteria with information determined in real time at the time of identification using the person to be identified using said interactive terminal.

7. System (1) as set forth in any of the preceding claims **characterised in that** the access means (5) to the secure site (2) is a premises (7) of the lock type wherein the control means (6) making it possible to identify those concerned by the transport with certitude is implemented, said local (7) permitting the presence of only a single person at each instant.

8. System (1) as set forth in any of the preceding claims, **characterised in that** the front portion (4₁) of the means of transport (4) is introduced into the secure site (2) via the secure opening (10) and isolated from the rear portion (4₂) of the means of transport 4 by the secure opening (10), the rear portion (4₂) being partitioned by a closing device (20) in a parking zone (15) that is not accessible from the exterior of the site of the system (1).

9. System (1) as set forth in any of the preceding claims, **characterised in that** the secure opening (10) is comprised of means of closing (22), adapted to the model of the means of transport (4), and of means of detection (23, 24) making it possible to detect any attempt to break into said secure opening (10).

10. System (1) as set forth in any of the preceding claims, **characterised in that** it comprises a cleaning and de-icing device (25, 26) making it possible to render the means of transport (4) operational for departure immediately after the opening of the parking area (15).

## Patentansprüche

1. System (1) für die Sicherheit von Passagieren im Hinblick auf deren Übergang an Bord eines Transportmittels (4) von der Art eines Flugzeugs oder eines Land- bzw. Wassertransportmittels, wobei das Besteigen des Transportmittels in einem einzigen gesicherten Raum (2) erfolgt, der ein Zugangsmittel (5) besitzt, das mit Kontrollmitteln (6) versehen ist, mit denen die am Transport beteiligten Personen, d.h. die Passagier und das Verwaltungs-, Technik- und Flugpersonal mit Sicherheit identifiziert werden können, während der gesicherte Raum (2) mit einem oder mehreren der besagten Kontrollmittel (6) versehen ist, die an strategischen Stellen angeordnet sind, so dass die besagten am Transport beteiligten Personen von deren Eintritt in den gesicherten Raum (2) an bis zum Besteigen des Transportmittels (4) verfolgt werden können, solange sich das Transportmittel (4) nicht bewegt, **dadurch gekennzeichnet, dass** der gesicherte Raum (2) mit mindestens einer gesicherten Öffnung (10) versehen ist, durch die mindestens ein Teil (4₁) des des Transportmittels (4) mit mindestens einem Zugangsmittel (8, 9) zu Zugang zum Transportmittel (4) in den besagten gesicherten Raum (2) eingeführt werden kann, wobei die besagte gesicherte Öffnung (10) aus Verschlussmitteln (22) besteht, die an die Dimensionen des Transportmittels (4) angepasst werden können, so dass jede Möglichkeit, durch die gesicherte Öffnung (10) aus dem gesicherten Raum (2) zu entweichen oder in ihn einzudringen, verhindert wird.

2. System (1) nach Anspruch 1, **dadurch gekennzeichnet, dass** die Kontrollmittel (6) den Zugang nur für Personen zulassen, die zuvor identifiziert und nach in einer Datenbank gespeicherten Kriterien registriert wurden.

3. System (1) nach einem der Ansprüche 1 oder 2, **dadurch gekennzeichnet, dass** eines der Kontrollmittel (6) bei dem Zugangsmittel (8, 9) zu dem besagten Transportmittel (4) angebracht ist.

4. System (1) nach einem der nachfolgenden Ansprüche, **dadurch gekennzeichnet, dass** die besagten Kontrollmittel (6) aus einem interaktiven Endgerät bestehen, das in der Lage ist, Informationen, insbesondere biometrische Daten aus einem Datenträger, die nach bestimmten Identifizierungskriterien darauf gespeichert sind, und/oder direkt an der zu identifizierenden Person zu sammeln, um die Identifizierung des Eigentümers des besagten Datenträgers vorzunehmen und ihm daraufhin den Zugang zu gewähren oder zu verweigern.

5. System (1) nach Anspruch 4, **dadurch gekennzeichnet, dass** der besagte Datenträger aus einem Personalausweis mit mindestens einen elektronischen Chip, auf dem ein persönlicher Algorithmus zur Identifikation ihres Eigentümers integriert ist, einer Antenne und einem CD-ROM oder sonstigen Mittel besteht, mit dem Informationen gespeichert werden können, die dazu dienen, mit spezifischen, über einen Computer betriebenen Softwareprogrammen entziffert zu werden.

6. System (1) nach Anspruch 4, **dadurch gekennzeichnet, dass** die besagte Identifikation mit einem Prozessor erfolgt, der in einem ersten Schritt nach dem Willkürprinzip eines oder mehrere der auf dem besagten Datenträger oder einer angeschlossenen Datenbank gespeicherten Kriterien, insbesondere biometrische Daten wie Lichtbilder, Fingerabdrücke, Irisanalyse, Unterschriftdynamik, Spracherkennung, DNA-Merkmale, ein Balkencode mit mindestens 8 Zeichen oder beliebige andere Daten, mit denen eine Person eindeutig identifiziert werden kann, auswählt und diese ausgewählten Kriterien anschließend mit Informationen vergleicht, die in Echtzeit zum Zeitpunkt der Identifizierung an der zu identifizierenden Person mit dem besagten interaktiven Endgerät bestimmt werden.

7. System (1) nach einem der vorhergehenden Ansprüche, **dadurch gekennzeichnet, dass** das Zugangsmittel (5) zu dem gesicherten Raum (2) ein Raum (7) vom Typ einer Schleuse ist, in der das Kontrollmittel (6), mit dem die am Transport beteiligten Personen mit Sicherheit identifiziert werden können, eingesetzt wird, wobei der besagte Raum (7) so ausgelegt ist, dass sich jeweils immer nur eine Person in ihm aufhalten kann.

8. System (1) nach einem der vorhergehenden Ansprüche, **dadurch gekennzeichnet, dass** das vordere Teil (4₁) des Transportmittels (4) durch die gesicherte Öffnung (10) in den gesicherten Raum (2) eingeführt wird und vom hinteren Teil (4₂) des Transportmittels (4) von der gesicherten Öffnung (10) abgetrennt wird, während das hintere Teil (4₂) des Transportmittels (4) mit einer Verschlussvorrichtung (20) in einer Abstellzone (15) abgetrennt wird, der von außerhalb des Schutzraums des Systems (1) aus unzugänglich ist.

9. System (1) nach einem der vorhergehenden Ansprüche, **dadurch gekennzeichnet, dass** die gesicherte Öffnung (10) aus an das Modell des Transportmittels (4) angepassten Verschlussmitteln (22) und aus Detektoren (23, 24) besteht, mit denen jeder Versuch, die besagte gesicherte Öffnung (10) zu durchbrechen, erkannt wird.

10. System (1) nach einem der vorhergehenden Ansprüche, **dadurch gekennzeichnet, dass** es eine Vorrichtung zum Reinigen und Enteisen (25, 26) besitzt, mit dem das Transportmittel (4) unmittelbar nach dem Öffnen der Abstellzone (15) abflug- bzw. abfahrbereit ist.
